# EUROPÄISCHE PATENTSCHRIFT

(11) **EP 2 475 900 B1**
(45) Veröffentlichungstag und Bekanntmachung des Hinweises auf die Patenterteilung: **27.11.2013**
(21) Anmeldenummer: 10801126.3
(22) Anmeldetag: 10.12.2010
(51) Int. Cl.: F16C 17/06

(54) **TRAGRING**
SUPPORT RING
BAGUE DE SUPPORT

(30) Priorität: 10.12.2009 DE 102009057482
(43) Veröffentlichungstag der Anmeldung: 18.07.2012
(73) Patentinhaber: John Crane Bearing Technology GmbH, 37079 Göttingen (DE)
(72) Erfinder: KLEIN, Uwe, 37130 Gleichen (DE); BENEKE, Reinhard, 37181 Hardegsen (DE)
(74) Vertreter: Schneider, Peter Christian
(86) Internationale Anmeldenummer: PCT/EP2010/007526
(87) Internationale Veröffentlichungsnummer: WO 2011/069666

(56) Entgegenhaltungen:
- WO-A1-95/16863
- US-A- 5 255 984
- US-A- 5 743 654
- US-A- 5 971 616

## Beschreibung

### Gebiet der Erfindung

Die Erfindung betrifft einen Tragring eines Kippsegmentgleitlagers zur Aufnahme einer Mehrzahl von Axialkippsegmenten mit einer ringförmigen Bodenplatte, die für die einzelnen Axialkippsegmente jeweils eine Abstützfläche aufweist, gegen die sich das jeweils zugeordnete Axialkippsegment mit einer Abstützung, die auf seiner der Bodenplatte zugewandten Segmentrückfläche angeordnetet ist, abstützt.

Zur Lagerung von Rotoren im Turbomaschinenbau, wie beispielsweise Turbinen, Kompressoren oder Turbogetrieben, werden heute größtenteils hydrodynamische Gleitlager eingesetzt. Die in den Maschinen auftretenden Axialkräfte werden hierbei meist über Kippsegment-Axiallager aufgenommen, welche in der einfachsten Form aus einem Kreisring als Auflagefläche, dem so genannten Tragring, und beweglichen Axialkippsegmenten bestehen.

### Stand der Technik

Aus der GB 2 433 560 ist ein Kippsegmentgleitlager mit einem Tragring zur Aufnahme einer Mehrzahl von Axialkippsegmenten bekannt. Der Tragring weist eine ringförmige Bodenplatte auf, die für die einzelnen Axialkippsegmente jeweils eine Abstützfläche bildet, gegen die sich die Axialkippsegmente mit einer Abstützung, die als ein auf der Segmentrückfläche angeordneter Steg ausgebildet ist, abstützen. An ihren in etwa radialer Richtung verlaufenden Seitenflächen weisen die Axialkippsegmente Nuten auf, in die Köpfe von Halteschrauben eingreifen.

Nachteilig dabei ist, dass die ringförmige Bodenplatte als Abstützfläche relativ starr ausgebildet ist. Um die bei einer ungleichmäßigen Lastverteilung entstehenden Lagerkräfte aufnehmen zu können, müssen die Kippsegmentgleitlager entsprechend groß dimensioniert werden oder durch aufwendige und kostenintensive Druckausgleichslager ersetzt werden.

Weiterhin ist aus der DE 44 14 848 C1 ein Kippsegmentgleitlager bekannt, dass zwei Lagen von Ausgleichstücken aufweist, welche in einem Tragring fixiert sind und darüber angeordnete Axialkippsegmente abstützen, wobei die Axialkippsegmente in Umfangsrichtung des Lagers durch Fixierelemente gesichert sind.

Dieses Kippsegmentgleitlager, das sich grundsätzlich bewährt hat, ist relativ aufwendig und entsprechend kostenintensiv in seiner Herstellung.

Ein Kippsegmentlager mit den Merkmalen des Oberbegriffs des Anspruchs 1 ist aus US 5 255 984 A bekannt.

### Aufgabenstellung

Aufgabe der vorliegenden Erfindung ist es daher, die bekannten Gleitlager so zu verbessern, dass sie bei kleinerem Bauraum einfacher und kostengünstiger ausgebildet sein können. Außerdem soll es möglich sein, eine ungleichmäßige Lastverteilung besser aufzunehmen bzw. kompensieren zu können.

### Darstellung der Erfindung

Diese Aufgabe wird in Verbindung mit dem Oberbegriff des Anspruches 1 dadurch gelöst, dass die Bodenplatte den Axialkippsegmenten zugeordnete Durchbrechungen aufweist, die jeweils einen elastisch verformbaren Kragbalken bilden, der mit seinem freien Ende die Abstützfläche für die Abstützung des zugeordneten Axialkippsegmentes bildet.

Durch die elastisch verformbaren Tragbalken wird eine lokale Nachgiebigkeit der Abstützflächen für die Abstützung der zugeordneten Axialkippsegmente erreicht, durch die es möglich ist, eine ungleichmäßige Lastverteilung über den Axiallager-Gleitflächen zu kompensieren. Im Vergleich zu den bekannten Kippsegmentgleitlagern kann die Breite des Lagers wesentlich geringer ausgebildet werden, wodurch auch ein Einbau in engste Bauräume möglich ist.

Gemäß einer bevorzugten Ausführungsform der Erfindung verläuft der Kragbalken in der Ebene der Abstützfläche zu seinem freien Ende hin etwa dreiecksförmig abnehmend. Durch den bis zur Krafteinleitung abnehmenden dreiecksförmigen Verlauf kann eine konstante Biegespannung über den Kragbalken gewährleistet werden. Für eine sichere Funktionsweise kann die Abstützfläche für die Abstützung des zugeordneten Axialkippsegmentes etwas vergrößert ausgeführt werden.

Gemäß einer weiteren bevorzugten Ausführungsform der Erfindung ist die Dicke des Kragbalkens in Abhängigkeit von der maximal zulässigen Biegespannung ausgebildet.

Gemäß einer weiteren bevorzugten Ausführungsform der Erfindung weist die Bodenplatte des Tragringes etwa radial nach außen und etwa radial nach innen je eine ringförmige Vertiefung auf, die bei maximaler Durchbiegung des Kragbalkens einen Anschlag für das Axialkippsegment bilden. Durch das Absetzen der Randbereiche der Bodenplatte gegenüber den Abstützflächen der Kragbalken wird ein Anschlag gebildet, durch den resultierend aus der maximal zulässigen Biegespannung die maximale Kragbalken-Durchbiegung begrenzt wird. D.h., nach Erreichen der maximal zulässigen Biegespannung setzen die Axialkippsegmente mit ihrer Abstützung auf den Randbereichen bzw. den ringförmigen Vertiefungen auf und verhindern somit bei Überlast eine plastische Verformung der Kragbalken. Die Abmessungen der Kragbalken sind auf die Abmessungen der Axialkippsegmente abgestimmt.

Nach einer weiteren bevorzugten Ausführungsform der Erfindung ist die auf der Segmentrückfläche angeordnete Abstützung als ein radial ausgerichteter Steg ausgebildet. Der Steg bildet dabei die Krafteinleitung gegenüber der Abstützfläche des Kragbalkens. Die Abstützung kann aber auch beispielsweise sphärisch aus Kugelsegmenten ausgebildet sein.

Gemäß einer weiteren bevorzugten Ausführungsform der Erfindung weist mindestens einer der Kragbalken auf seiner der Segmentrückfläche abgewandten Kragbalken-Rückseite mindestens einen Dehnmessstreifen auf. Die Kraftmessung, insbesondere der realen Axialkräfte in Kippsegmentgleitlagern erfolgt bei den bekannten Gleitlagern über separate kostenintensive Kraftmessdosen, welche zwischen dem Axialkippsegment und dem Tragring implementiert werden. Die einzelnen ölresistenten Kraftmessdosen müssen dabei innerhalb eines Axialkippsegments verbaut werden. Durch die Anordnung eines Dehnmessstreifens an dem Kragbalken kann nunmehr auch bei kleineren Baugrößen über die Durchbiegung des Kragbalkens die aufgebrachte Axiallast berechnet werden.

Nach einer weiteren bevorzugten Ausführungsform der Erfindung sind die Dehnmessstreifen mit einer Rechenelektronik verbunden, über die mit Hilfe des Signals der Dehnmessstreifen die Biegedehnung der Kragbalken bestimmt werden, aus der sich die Biegespannung bzw. die aufgebrachte Axiallast berechnen lässt. Die Anzahl der DMS-Messstellen ist frei wählbar. Grundsätzlich kann dabei jeder der Kragbalken mindestens einen Dehnmessstreifen (DMS) aufweisen.

Weitere Merkmale der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibungen der Zeichnungen

In den Zeichnungen zeigen:
- Figur 1:: eine Vorderansicht eines Kippsegmentgleitlagers mit einem entfernten Axialkippsegment,
- Figur 2:: eine Ansicht des Kippsegments von Fig. 1 entlang der Linie II - II geschnitten,
- Figur 3:: eine Ansicht des Kippsegmentgleitlagers von Fig. 1 entlang der Linie III - III geschnitten mit ungeschnittenem Axialkippsegment,
- Figur 4:: eine Vorderansicht eines weiteren Kippsegmentgleitlagers in räumlicher Darstellung,
- Figur 5:: eine räumliche Darstellung des Tragringes von Figur 4 ohne Axialkippsegmente mit eingeschraubten Segmenthalteschrauben,

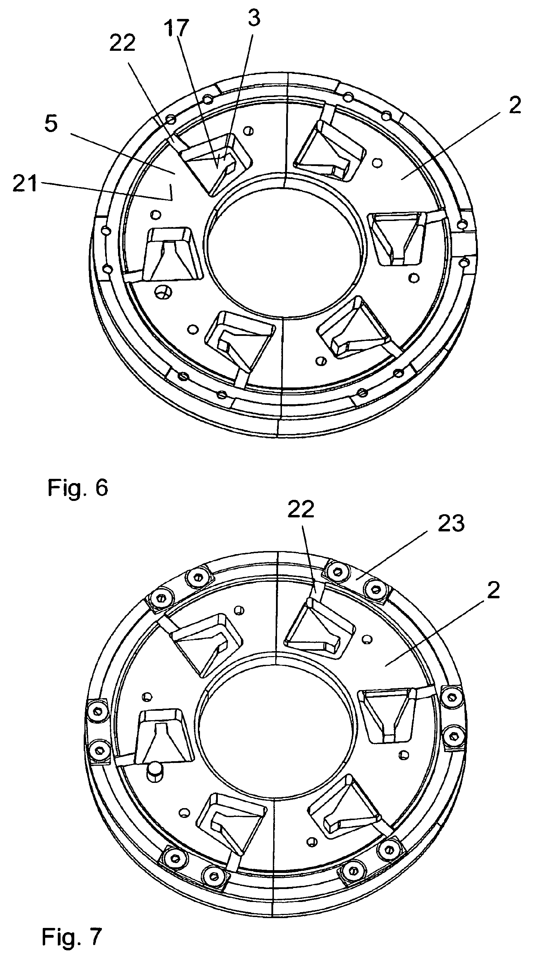

- Figur 6:: eine räumliche Darstellung des Tragringes von Figur 4 von der Rückseite gesehen
- Figur 7:: eine räumliche Darstellung des Tragringes von Figur 6 mit Haltklammern für eine DMS-Verkabelung, und

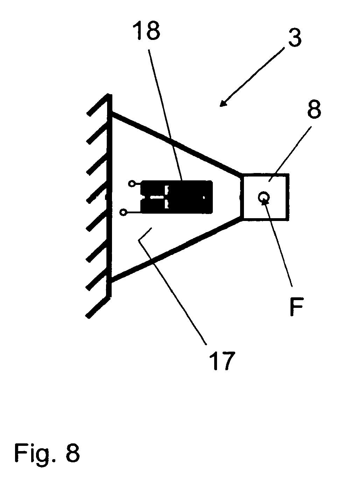

- Figur 8:: eine Draufsicht auf einen Kragbalken in vergrößerter Darstellung.

### Beschreibung der Ausführungsbeispiele

Ein Kippsegmentgleitlager 1 besteht im Wesentlichen aus einem Tragring 2 mit einer Mehrzahl von Kragbalken 3 und einer Mehrzahl von Axialkippsegmenten 4.

Der Tragring 2 weist eine ringförmige Bodenplatte 5 auf, die von einer ringförmigen Außenwandung 6 begrenzt wird. Die Bodenplatte 5 weist den Axialkippsegmenten 4 zugeordnete Durchbrechungen 7 auf, die so geformt sind, dass sie jeweils einen elastisch verformbare Kragbalken 3 bilden, der mit seinem freien Ende 8 eine Abstützfläche 9 für eine Abstützung 10 des Axialkippsegmentes 4 bildet. Die einzelnen Kragbalken 3 laufen dabei in der Ebene der Bodenplatte 5 bzw. der Abstützfläche 9 zu dem freien Ende 8 hin dreiecksförmig abnehmend.

Um einerseits die Festigkeit der Bodenplatte 5 zu gewährleisten und andererseits die notwendige elastische Verformbarkeit des Kragbalkens 3 sicherzustellen, ist der Kragbalken 3 von der Rückseite der Bodenplatte 5 her in seiner Dicke 11 gegenüber der Dicke 12 der Bodenplatte 5 reduziert.

Die Bodenplatte 5 weist radial nach außen, d.h. zu der Außenwandung 6 hin und radial nach innen je eine ringförmige Vertiefung 13, 14 auf, die bei maximaler Durchbiegung des Kragbalkens 3 einen Anschlag für das Axialkippsegment 4 bilden.

Die Axialkippsegmente 4 weisen auf ihrer dem Kragbalken 3 zugewandten Segmentrückfläche 15 die Abstützung 10, die in den Ausführungsbeispielen als ein etwa radial ausgerichteter Steg 16 ausgebildet ist, auf.

Die Kragbalken 3 weisen jeweils auf ihrer der Segmentfläche 15 abgewandten Kragbalken-Rückseite 17 einen Dehnmessstreifen 18 auf. Die Dehnmessstreifen 18 sind über eine nicht dargestellte DMS-Verkabelung mit einer ebenfalls nicht dargestellten Rechenelektronik verbunden.

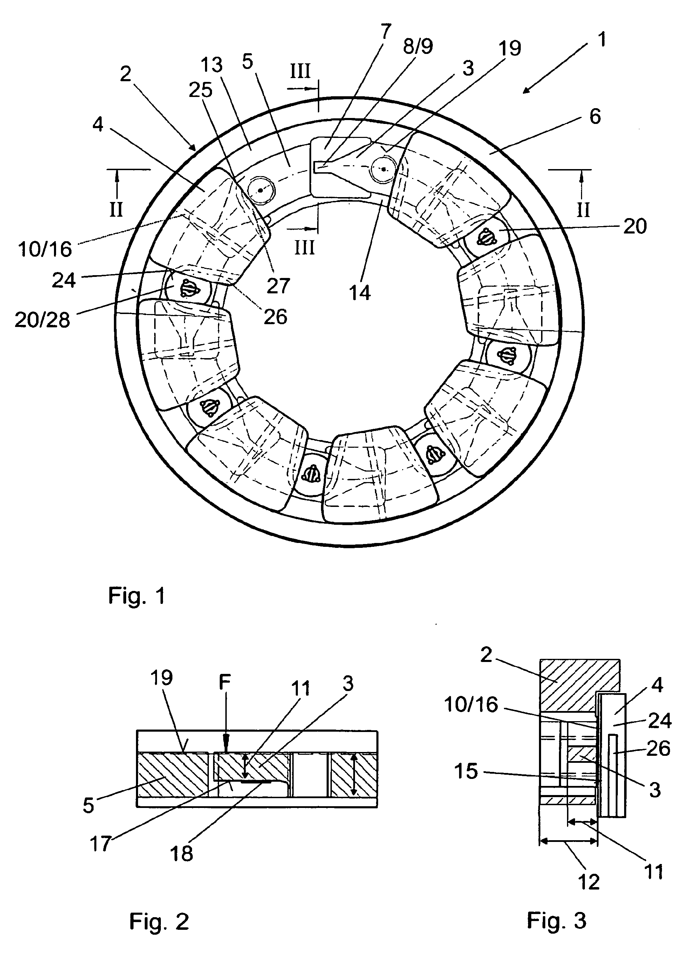

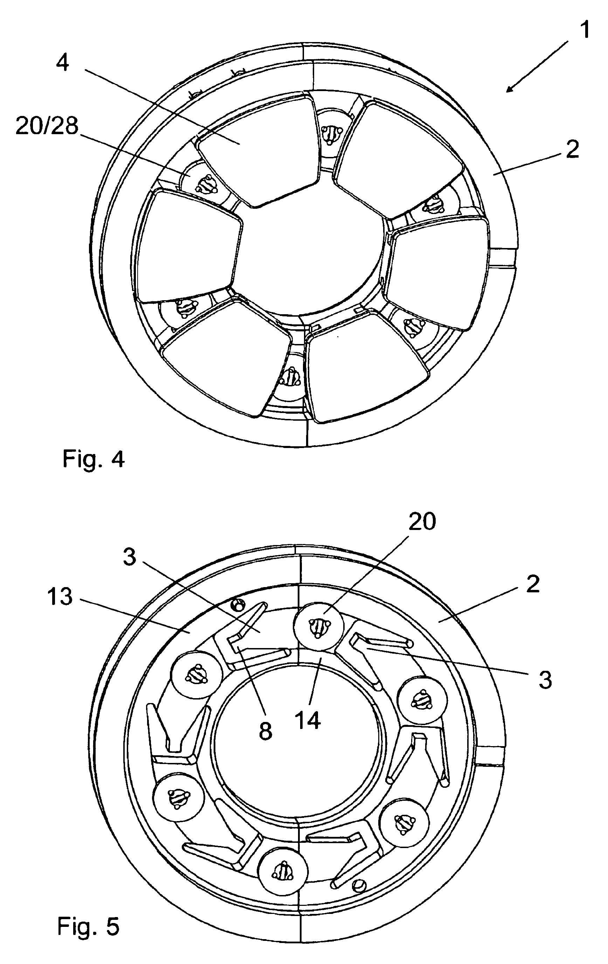

Entsprechend den Figuren 1 und 4 werden die Axialkippsegmente 4 auf der Vorderseite 19 der Bodenplatte 5 in an sich bekannter Weise durch Segmenthalteschrauben 20 gehalten. Auf ihrer der Vorderseite 19 abgewandten Rückseite 21 weist die Bodenplatte 5 Vertiefungen 22 auf, über die die DMS-Verkabelung von den Dehnmessstreifen nach außen weggeführt wird. Durch Halteklammern 23 kann die nicht dargestellte DMS-Verkabelung gehalten werden.

Die Axialkippsegmente 4 weisen an ihren Außenseiten 24, 25 Aufnahmenuten 26, 27 auf, in denen die Köpfe 28 der Segmenthalteschrauben 20 eintauchen.

### Bezugszeichenliste

- 1: Kippsegmentgleitlager
- 2: Tragring
- 3: Kragbalken
- 4: Axialkippsegment
- 5: Bodenplatte
- 6: Außenwandung
- 7: Durchbrechung
- 8: freies Ende
- 9: Abstützfläche
- 10: Abstützung
- 11: Dicke
- 12: Dicke
- 13: Vertiefung
- 14: Vertiefung
- 15: Segmentrückfläche
- 16: Steg
- 17: Kragbalken-Rückseite
- 18: Dehnmessstreifen (DMS)
- 19: Vorderseite
- 20: Segmenthalteschrauben
- 21: Rückseite
- 22: Vertiefungen
- 23: Halteklammern
- 24: Außenseite
- 25: Außenseite
- 26: Aufnahmenut
- 27: Aufnahmenut
- 28: Kopf

## Patentansprüche

1. Tragring (2) eines Kippsegmentgleitlagers (1) zur Aufnahme einer Mehrzahl von Axialkippsegmenten (4) mit einer ringförmigen Bodenplatte (5), die für die einzelnen Axialkippsegmente (4) jeweils eine Abstützfläche (9) aufweist, gegen die sich das jeweils zugeordnete Axialkippsegment (4) mit einer Abstützung (10), die auf seiner der Bodenplatte (5) zugewandten Segmentrückfläche (15) angeordnet ist, abstützt, wobei
die Bodenplatte (5) den Axialkippsegmenten (4) zugeordnete Durchbrechungen (7) aufweist, **dadurch gekennzeichnet, dass** die Durchbrechungen jeweils einen elastisch verformbaren Kragbalken (3) bilden, der mit seinem freien Ende (8) die Abstützfläche (9) für die Abstützung (10) des zugeordneten Axialkippsegmentes (4) bildet.

2. Tragring nach Anspruch 1,
**dadurch gekennzeichnet,**
**dass** der Kragbalken (3) in der Ebene der Abstützfläche (9) zu seinem freien Ende (8) hin dreiecksförmig abnehmend verläuft.

3. Tragring nach Anspruch 1 oder 2,
**dadurch gekennzeichnet,**
**dass** die Bodenplatte (5) radial nach außen und radial nach innen je eine ringförmige Vertiefung (13, 14) aufweist, die bei maximaler Durchbiegung des Kragbalkens (3) einen Anschlag für das Axialkippsegment (4) bilden.

4. Tragring nach einem der Ansprüche 1 bis 3,
**dadurch gekennzeichnet,**
**dass** die Dicke (11) des Kragbalkens (3) in Abhängigkeit von der maximal zulässigen Biegespannung ausgebildet ist.

5. Tragring nach einem der Ansprüche 1 bis 4,
**dadurch gekennzeichnet,**
**dass** die Abmessungen der Kragbalken (3) auf die Abmessungen der Axialkippsegmente (4) abgestimmt sind.

6. Tragring nach einem der Ansprüche 1 bis 5,
**dadurch gekennzeichnet,**
**dass** die auf der Segmentrückfläche (15) angeordnete Abstützung (10) als ein radial ausgerichteter Steg (16) ausgebildet ist.

7. Tragring nach einem der Ansprüche 1 bis 6,
**dadurch gekennzeichnet,**
**dass** mindestens einer der Kragbalken (3) auf seiner der Segmentrückfläche (15) abgewandten Kragbalken-Rückseite (17) mindestens einen Dehnmessstreifen (18) aufweist.

8. Tragring nach Anspruch 7,
**dadurch gekennzeichnet,**
**dass** der oder die Dehnmessstreifen (18) mit einer Rechenelektronik verbunden sind, über die mit Hilfe des Signals der Dehnmessstreifen (18) auf das Kippsegmentgleitlager (1) wirkende Axialkräfte ermittelbar sind.

## Claims

1. The invention relates to a supporting ring (2) of a tilt segment sliding bearing (1) for receiving a plurality of axial tilt segments (4), comprising an annular base plate (5), which for each of the individual axial tilt segments (4) has a support face (9) against which the respectively associated axial tilt segment (4) is supported using a supporting member (10) which is arranged on the segment rear face (15) facing the base plate (5), wherein the base plate (5) has openings (7) associated with the axial tilt segments (4),
**characterized in that**
each of said openings forms a resiliently deformable cantilever arm (3), which with the free end (8) thereof forms the support face (9) for the supporting member (10) of the associated axial tilt segment (4).

2. A supporting ring according to Claim 1,
**characterized in that**
the cantilever arm (3) tapers in the shape of a triangle toward its free end (8) in the plane of the support face (9).

3. A supporting ring according to either of Claims 1 or 2,
**characterized in that**
the base plate (5) has a ring-shaped recession (13, 14) both radially outward and radially inward which, when the cantilever arm (3) has reached maximum bending, form a stop for the axial tilt segment (4).

4. A supporting ring according to any of Claims 1 to 3,
**characterized in that**
the thickness (11) of the cantilever arm (3) is formed depending on the maximum allowable bending stress.

5. A supporting ring according to any of Claims 1 to 4,
**characterized in that**
the dimensions of the cantilever arm (3) are matched with the dimensions of the axial tilt segments (4).

6. A supporting ring according to any of Claims 1 to 5,
**characterized in that**
the supporting member (10) arranged on the segment rear face (15) is designed as a radially aligned strut (16).

7. A supporting ring according to any of Claims 1 to 6,
**characterized in that**
at least one of the cantilever arms (3) has at least one strain gauge (18) on the rear face of the cantilever arm (17) facing away from the segment rear face (15).

8. A supporting ring according to Claim 7,
**characterized in that**
the strain gauge(s) (18) are connected to metering electronics via which axial forces acting on the tilt segment sliding bearing (1) can be detected with the aid of the signal from the strain gauges (18).

## Revendications

1. Bague support (2) d'un palier lisse de segment basculant (1) pour le logement d'une pluralité de segments basculants axiaux (4) comprenant une plaque de fond (5) de forme annulaire, qui présente pour chacun des segments basculants axiaux (4) une surface de soutien (9), contre laquelle le segment basculant axial (4) respectivement attribué s'appuie avec un soutien (10), qui est disposé sur sa face arrière de segment (15) tournée vers la plaque de fond (5), la plaque de fond (5) présentant des percements (7) attribués aux segments basculants axiaux (4),
**caractérisée en ce que**,
chacun desdits percements forme une poutre en porte-à-faux (3) élastiquement déformable, qui forme avec son extrémité libre (8) la surface de soutien (9) pour le soutien (10) du segment basculant axial (4) attribué.

2. Bague support selon la revendication 1,
**caractérisée en ce que**,
la poutre en porte-à-faux (3) se rétrécit en forme triangulaire vers son extrémité libre (8) dans le plan de la surface de soutien (9).

3. Bague support selon l'une quelconque des revendications 1 ou 2,
**caractérisée en ce que**,
la plaque de fond (5) présente un retrait de forme annulaire (13, 14) en direction radiale vers l'extérieur et vers l'intérieur, lequel forme, au moment de flexion maximum de la poutre en porte-à-faux (3), une butée pour le segment basculant axial (4).

4. Bague support selon l'une quelconque des revendications 1 à 3,
**caractérisée en ce que**,
l'épaisseur (11) de la poutre en porte-à-faux (3) est fonction de la contrainte de flexion maximale admissible.

5. Bague support selon l'une quelconque des revendications 1 à 4,
**caractérisée en ce que**,
les dimensions de la poutre en porte-à-faux (3) sont adaptées en fonction de celles des segments basculants axiaux (4).

6. Bague support selon l'une quelconque des revendications 1 à 5,
**caractérisée en ce que**,
le soutien (10) disposé sur la face arrière de segment (15) consiste en une entretoise alignée radialement (16).

7. Bague support selon l'une quelconque des revendications 1 à 6,
**caractérisée en ce que**,
au moins une poutre en porte-à-faux (3) présente au moins un extensomètre (18) sur la face arrière de la poutre en porte-à-faux (17) tournant le dos à la face arrière de segment (15).

8. Bague support selon la revendication 7,
**caractérisée en ce que**,
le ou les extensomètre(s) (18) sont reliés à des systèmes électroniques de mesure, lesquels peuvent mesurer les forces axiales appliquées au palier lisse de segment basculant (1) grâce au signal émis par les extensomètres (18).
